# EUROPEAN PATENT SPECIFICATION

(11) **EP 1 809 120 B1**
(45) Date of publication and mention of the grant of the patent: **26.06.2013**
(21) Application number: 05790992.1
(22) Date of filing: 28.09.2005
(51) Int. Cl.: A23G 9/00

(54) **LOW FAT FROZEN CONFECTIONERY PRODUCT**
FETTARMES GEFRORENES KONFEKT
DESSERT GLACÉ À FAIBLE TENEUR EN MATIÈRES GRASSES

(30) Priority: 18.10.2004 EP 04256393
(43) Date of publication of application: 25.07.2007
(73) Proprietor: Unilever PLC, London EC4Y 0DY (GB); Unilever N.V., 3013 AL Rotterdam (NL)
(72) Inventor: BRAMLEY, Allan Sidney,, Bedford, Bedfordshire MK44 1LQ (GB); LACY, Ian,, Bedford, Bedfordshire MK44 1LQ (GB); LINDNER, Nigel Malcolm,, Bedford, Bedfordshire MK44 1LQ (GB); QUAIL, Patricia Jill,, Bedford, Bedfordshire MK44 1LQ (GB)
(74) Representative: Hugot, Alain
(86) International application number: PCT/EP2005/010579
(87) International publication number: WO 2006/042632

(56) References cited:
- WO-A-99/37164
- US-A- 5 215 777
- US-A- 6 096 867
- US-A1- 2002 072 108
- US-B1- 6 200 622
- PATENT ABSTRACTS OF JAPAN vol. 1999, no. 06, 31 March 1999 (1999-03-31) -& JP 01 218553 A (GENERAL FOODS CORP), 31 August 1989 (1989-08-31)

## Description

### Field of the invention

The present invention relates to low fat frozen dairy confectionery products which contain ice structuring proteins.

### Background to the invention

Since the beginning of the 1980s there has been an increasing demand for frozen confectionery products and desserts such as ice cream and related products which have a reduced calorific value.

Reducing the amount of fat in the ice cream would be the most effective way of reducing the calorific value as it has a calorific value per gram which is higher than that of carbohydrates. However, by reducing the amount of fat in the ice cream, considerable difficulties arise as its effectiveness in stabilising the structure is reduced. Insufficiently stable products are not robust to the cold chain and are unacceptable to consumers.

There are three phases that contribute to structure and therefore stability of ice cream, namely fat, ice and the matrix, which includes stabilisers.

In low fat ice cream where the structuring contribution of fat has been decreased, to maintain or improve product stability the contribution of either or both the ice and matrix phases must be increased. However, while increasing the ice content or stabiliser level may improve product stability this has undesirable effects on the texture of the ice cream. For example if the ice content is too high the ice cream will be hard and icy, whereas if the stabiliser level is too high the ice cream will have a gummy, gel-like texture as well as off flavours associated with the stabilisers.

US 6 200 622 discloses a process for the production of a frozen food product comprising an antifreeze peptide.

US 6 096 867 discloses that plant antifreeze proteins can be incorporated into frozen confectionery products.

US 2002 / 072108 discloses that antifreeze peptides from bacteria from an aqueous low-temperature environment can be incorporated in frozen food products.

US 5 215 777 discloses a process for producing low or non-fat ice cream.

### Summary of the invention

We have now found that the addition of ice structuring proteins (ISPs) to low fat frozen dairy confectionery products significantly improves the stability of the product without deleterious effects on texture and/or taste and without the need for high levels of stabilisers. Further, we have found that where ISP is added in combination with increased levels of stabilisers, such as gelatin, the ISP masks/reduces the deleterious effects of the stabilisers on product texture (e.g. gumminess) and taste resulting in further improvements in stability without the side effects normally associated with increased levels of stabilisers.

Accordingly, the present invention provides a low fat dairy frozen confectionery product having 3 wt% or less fat which product comprises an ice structuring protein (ISP). Preferably the product has 2 wt% or less fat.

Preferably the product comprises at least 0.0005 wt% ISP.

In one embodiment, the product comprises at least 0.5 wt% stabilisers. In another embodiment the product comprises less than 0.5 wt% stabilisers.

In one embodiment, the product has surface definition, by which we mean the product has one or more shaped non-planar surfaces, typically shaped by a moulding or extrusion process or similar.

The present invention also provides the use of an ice structuring protein (ISP) to stabilise the structure of a low fat dairy frozen confectionery product having 3 wt% or less fat. In a related aspect the present invention provides the use of an ice structuring protein (ISP) to reduce the deleterious effects of stabilisers on texture and/or taste in a low fat dairy frozen confectionery product having 3 wt% or less fat.

In another related aspect, the present invention provides the use of an ice structuring protein (ISP) to enhance the shape retention of a low fat dairy frozen confectionery product having 3% or less fat.

The present invention further provides a method of reducing the deleterious effects of stabilisers on texture and/or taste in a low fat dairy frozen confectionery product having 3 wt% or less fat which method comprises adding to the product an ice structuring protein (ISP) prior to, during, and/or after freezing of the product.

### Detailed description of the invention

Unless defined otherwise, all technical and scientific terms used herein have the same meaning as commonly understood by one of ordinary skill in the art (e,g. in frozen confectionery manufacture, molecular biology and biochemistry). Definitions and descriptions of various terms and techniques used in frozen confectionery manufacture are found in Ice Cream, 4th Edition, Arbuckle (1988), Van Nostrand Reinhold Company, New York, NY. Ice Cream, 6th Edition, Robert T. Marshall, H. Douglas Goff and Richard W. Hartel (2003), Kluwer Academic/Plenum Publishers.

Standard techniques are used for molecular and biochemical methods (see generally, Sambrook et al., Molecular Cloning: A Laboratory Manual, 3rd ed. (2001) Cold Spring Harbor Laboratory Press, Cold Spring Harbor, N.Y. and Ausubel et al., Short Protocols in Molecular Biology (1999) 4th Ed, John Wiley & Sons, Inc. - and the full version entitled Current Protocols in Molecular Biology).

### Ice structuring proteins

Ice structuring proteins (ISPs) are proteins that can influence the shape and size of the crystals of ice formed when freezing does occur, and inhibit recrystallisation of ice (Clarke et al., 2002, Cryoletters 23: 89-92; Marshall et al., Ice Cream, 6th Edition, ibid.). Many of these proteins were identified originally in organisms that live in sub-zero environments and are thought to protect the organism from the deleterious effects of the formation of ice crystals in the cells of the organism. For this reason many ice structuring proteins are also known as antifreeze proteins (AFPs). In the context of the present invention, an ISP is defined as a protein that has ice recrystallisation inhibitory (RI) activity.

Ice recrystallisation inhibitory activity properties can conveniently be measured by means of a modified splat assay as described in WO00/53029:
2.5 µl of the solution under investigation in 30% (w/w) sucrose is transferred onto a clean, appropriately labelled, 16 mm circular coverslip. A second coverslip is placed on top of the drop of solution and the sandwich pressed together between finger and thumb. The sandwich is dropped into a bath of hexane held at -80°C in a box of dry ice. When all sandwiches have been prepared, sandwiches are transferred from the -80°C hexane bath to the viewing chamber containing hexane held at -6°C using forceps pre-cooled in the dry ice. Upon transfer to - 6°C, sandwiches can be seen to change from a transparent to an opaque appearance. Images are recorded by video camera and grabbed into an image analysis system (LUCIA, Nikon) using a 20x objective. Images of each splat are recorded at time = 0 and again after 60 minutes. The size of the ice-crystals in both assays is compared by placing the slides within a temperature controlled cryostat cabinet (Bright Instrument Co Ltd, Huntington, UK). Images of the samples are transfered to a Quantimet 520 MC image analysis system (Leica, Cambridge UK) by means of a Sony monochrome CCD videocamera.

Ice crystal sizing can be performed by hand-drawing around the ice-crystals. Typically, at least 100 to 400 crystals are sized for each sample. The ice crystal size is taken as being the longest dimension of the 2D projection of each crystal. The average crystal size is determined as the number average of the individual crystal sizes. The size of the ice-crystals in both assays is compared. If the size at 30-60 minutes is similar or only moderately (less than 10%) increased compared to the size at t=0, and/or the crystal size is less than 20 micrometer, preferably from 5 to 15 micrometer this is an indication of good ice-crystal recrystallisation properties.

Significant ice recrystallisation inhibitory activity can be defined as where a 0.01 wt% solution of the ISP in 30 wt% sucrose, cooled rapidly (at least Δ50°C per minute) to -40°C, heated rapidly (at least Δ50°C per minute) to -6°C and then held at this temperature results in an increase in average ice crystal size over one hour of less than 5 µm.

### Types of ISPs

ISPs for use according to the present invention can be derived from any source provided they are suitable for inclusion in food products. ISPs have been identified to date in fish, plants, lichen, fungi, micro-organisms and insects. In addition, a number of synthetic ISPs have been described.

Examples of fish ISP materials are AFGP (for example obtainable from Atlantic cod, Greenland cod and Tomcod), Type I ISP (for example obtainable from Winter flounder, Yellowtail flounder, Shorthorn sculpin and Grubby sculpin), Type II ISP (for example obtainable from Sea raven, Smelt and Atlantic herring) and Type III ISP (for example obtainable from Ocean pout, Atlantic wolffish, Radiated shanny, Rock gunnel and Laval's eelpout).

Type III ISPs are particularly preferred. Type III ISPs typically have a molecular weight of from about 6.5 to about 14 kDa, a beta sandwich secondary structure and a globular tertiary structure. A number of genes encoding type III ISPs have been cloned (Davies and Hew, 1990, FASEB J. 4: 2460-2468). A particularly preferred type III ISP is type III HPLC-12 (Accession No. P19614 in the Swiss-Prot protein database).

Lichen AFPs are described in WO99/37673 and WO01/83534.

Examples of plants in which ISPs have been obtained are described in WO98/04699 and WO98/4148 and include garlic-mustard, blue wood aster, spring oat, winter cress, winter canola, Brussels sprout, carrot (GenBank Accession No. CAB69453), Dutchman's breeches, spurge, daylily, winter barley, Virginia waterleaf, narrow-leaved plantain, plantain, speargrass, Kentucky bluegrass, Eastern cottonwood, white oak, winter rye (Sidebottom et al., 2000, Nature 406: 256), bittersweet nightshade, potato, chickweed, dandelion, spring and winter wheat, triticale, periwinkle, violet and grass.

The ISPs can be obtained by extraction from native sources by any suitable process, for example the isolation processes as described in WO98/04699 and WO98/4148

Alternatively, ISPs can be obtained by the use of recombinant technology. For r example host cells, typically micro-organisms or plant cells, may be modified to express ISPs and the ISPs may then be isolated and used in accordance with the present invention. Techniques for introducing nucleic acid constructs encoding ISPs into host cells are well known in the art.

-Typically, an appropriate host cell or organism would be transformed by a nuclei c acid construct that encodes the desired ISP. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - `generally regarded as safe' (GRAS).

Suitable fungal species include yeasts such as (but not limited to) those of the genera *Saccharomyces, Kluyveromyces, Pichia, Hansenula, Candida, Schizo saccharomyces* and the like, and filamentous fungal species such as (but not limited to) those of the genera *Aspergillus, Trichoderma, Mucor, Neurospora, Fusarium* and the like. Preferably the species selected is a yeast, most preferably a species of *Saccharomyces* such as *S. cerevisiae.* Where glycosylation of the ISP leads to reduced activity then it is preferred that the host exhibits reduced glycosylation of heterologous proteins.

A wide variety of plants and plant cell systems can also be transformed with the nucleic acid constructs of the desired polypeptides. Examples of plant species include maize, tomato, tobacco, carrots, strawberries, rape seed and sugar beet.

The sequences encoding the ISPs are preferably at least 80% identical at the amino acid level to an ISP identified in nature, more preferably at least 95% or 100% identical. However, persons skilled in the art may make conservative substitutions or other amino acid changes that do not reduce the RI activity of the ISP. For the purpose of the invention these ISPs possessing this high level of identity to an ISP that naturally occurs are also embraced within the term "ISPs".

### Low fat frozen dairy confectionery products

Frozen dairy confections are confections that typically contain milk or milk solids, such as ice cream, milk ice, frozen yoghurt and sherbet. The term "milk" includes milk-substitutes such as soya milk, although mammalian milk is preferred. Preferably the frozen dairy confection is an ice cream or milk ice.

The low fat product of the invention contains 3 wt% or less fat, preferably 2 wt% or less, more preferably less than 2 wt%, or 1 wt% or less. In one embodiment, the product is fat-free, which means that the product contains su bstantially no fat (i.e. less than 0.1 wt%). Where the product is coated with a non-dairy composition such as a chocolate or couverture layer, the determination of fat content for the product should disregard the coating.

Frozen confections containing milk preferably contain at least a bout 3 wt% milk solid non-fat (MSNF), more preferably from about 5 wt% to about 25 wt% MSNF.

Stabilisers may be present in the frozen products of the invention although it should be noted that the stabilising effects of the ISP can all ow for stabiliser replacement in some cases. However, significant levels of stabil isers may still be required, in addition to ISP, in some product formulations, such as very low fat products with less than 1 wt% fat, to produce the desired product stability. Nonetheless, the resulting products are improved over previous products because the ISP reduces or ameliorates the deleterious effects of the stabilisers on texture and taste.

Suitable stabilisers include alginates, gelatin, gum acacia, guar gum, gum karaya. locust bean gum, carageenan and salts thereof, xanthan gum, microcrystalline cellulose, cellulose ethers or mixtures thereof. The amount of stabiliser is preferably 1.5% or less by weight, more preferably 1 % or less by weight such as from 0.1 to 0.8 wt%.

In one embodiment, the product comprises at least 0.5 wt% stabilisers, such as at least 0.7 wt% stabilisers. Preferably the level of fat in such as product is less than 2 or 1 wt%. In another embodiment the product comprises less than 0.5 wt% stabilisers. Preferably the level of fat in such as product is at least 1 wt% or more, more preferably at least 2 wt%.

Frozen confections of the invention typically comprise at least about 0.0001 wt% ISP, more preferably at least 0.0005 wt%. ISPs can be used at very low concentrations and therefore preferably the confections comprise less than 0.05 wt% ISP. A preferred range is from about 0.001 to 0.01 wt%, more preferably from 0.005 to 0.01 wt%.

The frozen confections may be aerated or unaerated, preferably aerated. By unaerated is meant a frozen confection having an overrun of less then 20%, preferably less than 10%. An unaerated frozen confection is not subjected to deliberate steps such as whipping to increase the gas content. Nonetheless, it will be appreciated that during the preparation of unaerated frozen confections, low levels of gas, such as air, may be incorporated in the product. The amount of overrun present in an aerated product will vary depending on the desired product characteristics. For example, the level of overrun in ice crea m is typically from about 70 to 100%, and in confectionery such as mousses the overrun can be as high as 200 to 250 wt%, whereas the overrun in milk ices is from 25 to 30%. Aerated frozen confections preferably have an overrun of from 30% to 200%, more preferably from 50% to 150%.

Frozen confections of the invention can be manufactured using a variety of techniques known in the art. Products are typically frozen quiescently or using agitation, such as in a surface-scraped heat exchanger. Products may be moulded. Products may contain complex shapes and have a high degree of surface definition since the addition of ISP preserves the stability of such shapes and structures.

ISPs can be added prior to, during or after freezing of the product. If added after freezing, this will take place whilst the product is still plastic so that the ISP can be mixed e.g. after extrusion from a surface-scraped heat exchanger and prior to hardening.

Ice cream products and the like can be subjected to an optional cold hardening step of below from -20°C to -25°C.

The present invention also encompasses compositions for producing a low fat frozen confectionery product of the invention, which compositi on comprises ISP, preferably at least 0.005 wt% ISP. Such compositions include liquid premixes and dry mixes, for example powders, to which an aqueous liquid, such as milk or water, is added.

The present invention will now be further described with reference to the following examples, which are illustrative only and non-limiting.

### EXAMPLES

### Materials and methods

### Formulations

A typical low fat formulation with less than 1 wt% fat and modified formulations with either a higher ice content or a higher stabiliser level or both a higher ice content and higher stabiliser level were considered. The formulations for each ice cream are given below.

| | (1) | (2) | (3) | (4) | (5) |
|---|---|---|---|---|---|
| | Control | ++ ice | + ice | + gelatin | + ice + gelatin |
| Whey powder | 2.5 | 2.5 | 2.5 | 2.5 | 2.5 |
| Skimmed Milk Powder | 11.917 | 11.917 | 11.917 | 11.917 | 11.917 |
| 34DE Corn Syrup | 5.0 | 2.5 | 5.0 | 5.0 | 5.0 |
| Butterfat | 0.5 | 0.5 | 0.5 | 0.5 | 0.5 |
| Stabiliser Blend CC3052 | 0.5 | 0.5 | 0.5 | 0.5 | 0.5 |
| Gelatin | 0.25 | 0.25 | 0.25 | 0.5 | 0.5 |
| Emulsifier | 0.15 | 0.15 | 0.15 | 0.15 | 0.15 |
| Polydextrose | 5.25 | 5.25 | 5.25 | 5.25 | 5.25 |
| 10DE Maltodextrin | 1.0 | - | - | 1.0 | - |
| Sucrose | 12.0 | - | 2.1 | 12.0 | 2.1 |
| Fructose | - | 7.0 | 5.8 | - | 5.8 |
| Water | 60.933 | 69.433 | 66.033 | 60.683 | 65.783 |
| Ice at -18°C | 50% | 60% | 55% | 50% | 55% |

As it is not possible to increase the ice content and keep the sweetness, sugar composition and total solids levels constant, it was decided when modifying the formulations to keep the sweetness constant and alter the sugar composition to give the required ice content.

The formulations all contain 0.5 wt% of a commercial stabiliser blend, Continental Custom Ingredients (CCI) CC3052, which contains the following ingredients, methyl crystalline cellulose, cellulose gum, mono and di-glycerides, locust bean gum, polysorbate 80, carrageenan and dextrose. Increases in stabiliser levels for test purposes were effected by adding gelatin (0.25 or 0.5 wt%).

### Processing

All ice creams were made in a standard MF75 freezer, aerated to 100% overrun, extruded at about -7°C and collected in 500 ml blocks that were blast frozen and then stored at -25°C before being tested or tasted.

### Testing

### Shape Retention

Assessment of shape retention was conducted when blocks of the ice cream were stored at a constant temperature in a temperature controlled cabinet. Storage temperatures of -5°C and -3°C were considered. Photographs of the blocks of ice cream were taken at regular intervals and from the photographs an assessment of changes to the shape were made by a panel. By comparing changes to the shape, products made from different formulations could be ranked and an assessment of improvement in product stability obtained.

### Sensory Properties

Evaluation of the sensory properties was carried out through informal tastings. In particular attributes related to ice phase and stabiliser level, such as hardness, iciness, gumminess and aftertaste were considered.

### Example 1 - Effect of increased ice phase and/or stabiliser levels on low fat ice cream stability and texture.

The shape retention and texture of the following ice cream formulations was considered:
1) 0.8% fat, 50% ice at -18°C and 0.25% gelatin (control)
2) 0.8% fat, 60% ice at-18°C and 0.25% gelatin (++ ice)
3) 0.8% fat, 55% ice at -18°C and 0.25% gelatin (+ ice)
4) 0.8% fat, 50% ice at-18°C and 0.5% gelatin (+ gelatin)
5) 0.8% fat, 55% ice at-18°C and 0.5% gelatin (+ ice + gelatin)

### Results - Sensory analysis

Sensory analysis of ice cream made from formulation 2 indicated that compared to control formulation 1 it was hard, cold eating with a thin watery breakdown. This texture was considered unacceptable and no further tests on ice cream using this formulation were done.

Sensory analysis of ice cream made from formulation 3 indicated that although there were changes in textural attributes similar to formulation 2, the changes were not extreme and the texture was acceptable.

Sensory analysis of ice cream made from formulation 4 indicated that there was an increase in gumminess associated with the increased levels of gelatin to 0.5 wt%.

Sensory analysis of ice cream made from formulation 5 indicated that there were changes in hardness and gumminess associated with the increase in ice content and gelatin.

### Results - stability (shape retention)

The results obtained showed that, as expected, at both storage temperatures (-5°C and -3°C) either increasing the ice content or increasing the levels of gelatin to 0.5 wt% improves the shape retention of the products. Also as expected, a combination of increasing the ice content as well as adding gelatin gives the most improvement on shape retention. Further it was seen at the higher storage temperature that the addition of gelatin has more effect than increasing the ice content as at this storage temperatu re the ice content is quite low and the effect of the gelatin in the matrix phase is greater than the ice phase.

This example illustrates that for low fat ice creams, product stability, in terms of shape retention, can be improved by either increasing the ice content or increasing the levels of stabiliser. However, in general there are undesirable changes to the texture of the ice cream.

### Example 2 - Effect of ISP on stability of low fat ice cream

The effect of ice structuring protein (ISP) on the stability of low fat ice cream was determined by the addition of ISP to formulation 1, 3, 4 and 5 of Example 1. Recombinant ocean⁻ pout type III AFP HPLC-12 produced in yeast (see WO97/02343 was added to the formulation at a level of 0.001 wt%. ISP was also added to formulations 3, 4 and 5 to determine the effect of ISP in combination with increased ice levels and/or increased stabiliser levels.

The results of the shape retention tests demonstrate that at both storage temperatures the addition of ISP to formulation 1 improves shape retention more than either increasing the ice content (formulation 3 without ISP) or adding gelatin (formulation 4 without ISP) or increasing the ice content and adding gelatin (formulation 5 without ISP). The improvement obtained by adding ISP is greater at the lower storage temperature as there is a higher ice content in the ice cream at this temperature and ISP modifies the structure of the ice network in the ice cream.

Further increases in stability were seen when the addition of ISP was combined with increased levels of ice (formulation 3 + ISP) or increased levels of stabilisers (formulation 4 + ISP).

These results demonstrate that the addition of ISP to low fat formulations can be used as an alternative, or in addition, to either increasi ng ice content or addition of stabilisers to improve product stability.

### Example 3 - Effect of ISP on sensory properties of low fat ice cream

The effect of ISP on the textural and sensory properties was also considered for the four formulations tested in Example 2.

It was found that for formulation 1 containing ISP, the ice cream was firmer, but was not unacceptably hard or brittle. However, unexpectedly, it was found that the sensory properties of the ice cream formulations containing increased levels of gelatin (formulations 4 and 5) were affected by the ISP. It was found that in the presence of ISP the gumminess associated with the addition of gelatin was less noticeable and the texture was more desirable.

These results demonstrate that by using ISP instead of increased levels stabilisers to stabilise a low fat ice cream formulation, unacceptable changes to product texture associated with the addition of high levels of stabiliser can be avoided. Furthermore, by adding ISP to a formulation it is possible to use increased levels of stabiliser to give an even more stable product whilst avoiding the unacceptable texture and taste that normally results and so produce a more stable low fat ice cream with a more desirable texture.

### Conclusions

In low fat ice creams stability can be improved by modifying the formulation by either increasing the ice content or increasing the level of stabiliser, which affects the matrix properties. However, both these options may give products that do not have an acceptable texture. Also the effects on product texture limit the amount by which either the ice content or stabiliser level can be increased.

The addition of ISP, without changing ice content or stabiliser level, has a greater effect on improving product stability than either increasing the ice content or increasing the level of stabiliser, and does not have the undesirable effect on product texture.

The addition of ISP as well as increasing ice content and stabiliser level gives the most significant improvement in product stability. Also the addition of ISP to a formulation that has increased levels of stabilisers decreases the undesirable effects on texture, such as gumminess and aftertaste, associated with such high levels of stabiliser. In effect, the ISP is acting to mask the deleterious effects of high stabiliser levels on texture and taste whilst also acting to stabilise the product.

The various features and embodiments of the present invention, referred to in individual sections above apply, as appropriate, to other sections, *mutatis mutandis.* Consequently features specified in one section may be combined with features specified in other sections, as appropriate.

All publications mentioned in the above specification are herein incorporated by reference. Various modifications and variations of the described methods and products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

## Claims

1. A low fat dairy frozen confectionery product having 3% or less fat which product comprises an ice structuring protein (ISP).

2. A product according to claim 1 which has 2% or less fat.

3. A product according to claim 1 or claim 2 which comprises at least 0.0005 wt% ISP.

4. A product according to any one of the preceding claims which further comprises at least 0.5 wt% stabilisers.

5. A product according to any one of the preceding claims which has surface definition.

6. Use of an ice structuring protein (ISP) to stabilise the structure of a low fat dairy frozen confectionery product having 3% or less fat.

7. Use of an ice structuring protein (ISP) to enhance the shape retention of a low fat dairy frozen confectionery product having 3% or less fat.

8. Use of an ice structuring protein (ISP) to reduce the deleterious effects of stabilisers on texture and/or taste in a low fat dairy frozen confectionery product having 3% or less fat.

9. A method of reducing the deleterious effects of stabilisers on texture and/or taste in a low fat dairy frozen confectionery product having 3% or less fat which method comprises adding to the product an ice structuring protein (ISP) prior to, during, and/or after freezing of the product.

## Patentansprüche

1. Fettarmes gefrorenes Milchsüßwarenprodukt, das 3 % oder weniger Fett hat, wobei das Produkt ein Eis-strukturierendes Protein (ice structuring protein, ISP) umfasst.

2. Produkt gemäß Anspruch 1, das 2 % oder weniger Fett hat.

3. Produkt gemäß Anspruch 1 oder Anspruch 2, das wenigstens 0,0005 Gew.-% ISP umfasst.

4. Produkt gemäß einem der vorangehenden Ansprüche, das außerdem wenigstens 0,5 Gew.-% Stabilisatoren umfasst.

5. Produkt gemäß einem der vorangehenden Ansprüche, das Oberflächendefinition hat.

6. Verwendung eines Eis-strukturierenden Proteins (ISP), um die Struktur eines fettarmen gefrorenen Milchsüßwarenproduktes, das 3 % oder weniger Fett hat, zu stabilisieren.

7. Verwendung eines Eis-strukturierenden Proteins (ISP), um die Formretention eines fettarmen gefrorenen Milchsüßwarenproduktes, das 3 % oder weniger Fett hat, zu verstärken.

8. Verwendung eines Eis-strukturierenden Proteins (ISP), um die nachteiligen Wirkungen von Stabilisatoren auf Textur und/oder Geschmack in einem fettarmen gefrorenen Milchsüßwarenprodukt, das 3 % oder weniger Fett hat, zu verringern.

9. Verfahren zur Verringerung der nachteiligen Wirkungen von Stabilisatoren auf Textur und/oder Geschmack in einem fettarmen gefrorenen Milchsüßwarenprodukt, das 3 % oder weniger Fett hat, wobei das Verfahren Zusetzen eines Eis-strukturierenden Proteins (ISP) vor, während und/oder nach Gefrieren des Produktes zu dem Produkt umfasst.

## Revendications

1. Produit laitier glacé de confiserie à faible teneur en matières grasses, contenant 3 % ou moins de matières grasses, ledit produit comprenant une protéine structurante de la glace (ISP).

2. Produit selon la revendication 1, contenant 2 % ou moins de matières grasses.

3. Produit selon la revendication 1 ou la revendication 2, comprenant au moins 0,0005 % en poids d'ISP.

4. Produit selon 1"une quelconque des revendications précédentes, comprenant en outre au moins 0,5 % en poids d'agents de stabilisation.

5. Produit selon l'une quelconque des revendications précédentes, présentant une définition de surface.

6. Utilisation d'une protéine structurante de la glace (ISP) pour stabiliser la structure d'un produit laitier glacé de confiserie à faible teneur en matières grasses contenant 3 % ou moins de matières grasses.

7. Utilisation d'une protéine structurante de la glace (ISP) pour augmenter la rétention de forme d'un produit laitier glacé de confiserie à faible teneur en matières grasses contenant 3 % ou moins de matières grasses.

8. Utilisation d'une protéine structurante de la glace (ISP) pour réduire les effets délétères des agents de stabilisation sur la texture et/ou le goût dans un produit laitier glacé de confiserie à faible teneur en matières grasses contenant 3 % ou moins de matières grasses.

9. Méthode de réduction des effets délétères des agents de stabilisation sur la texture et/ou le goût dans un produit laitier glacé de confiserie à faible teneur en matières grasses contenant 3 % ou moins de matières grasses, ledit procédé comprenant l'ajout au produit d'une protéine structurante de la glace (ISP) avant, pendant et/ou après la congélation du produit.
